# FASCICULE DE BREVET EUROPEEN

(11) **EP 1 981 038 B1**
(45) Date de publication et mention de la délivrance du brevet: **07.09.2011**
(21) Numéro de dépôt: 08153951.2
(22) Date de dépôt: 02.04.2008
(51) Int. Cl.: H01B 7/282, C08J 3/22, C08L 67/02, C08G 63/85

(54) **Procédé de fabrication d'un câble d'énergie et/ou de télécommunication**
Herstellungsverfahren eines Strom- und/oder Telekommunikationskabels
Method of manufacturing a power and/or telecommunications cable

(30) Priorité: 05.04.2007 FR 0754301
(43) Date de publication de la demande: 15.10.2008
(73) Titulaire: Nexans, 75008 Paris (FR)
(72) Inventeur: Pinto, Olivier, 69003 Lyon (FR); Fournier, Jérôme, 69006 Lyon (FR); Piechaczyk, Arnaud, 69006 Lyon (FR); Tribut, Laurent, 69003 Lyon (FR); Fenouillot,Françoise, 38080 L'Isle d'Abeau (FI); Pascault, Jean-Pierre, 69100 Villeurbanne (FR)
(74) Mandataire: Feray, Valérie

(56) Documents cités:
- EP-A- 1 580 246
- WO-A-2005/063882
- FR-A- 2 854 900

## Description

La présente invention se rapporte à un procédé de fabrication d'un câble d'énergie et/ou de télécommunication, ainsi qu'audit câble obtenu par ledit procédé.

Il est bien connu que l'incorporation d'un polyester dans une composition élastomère permet typiquement d'améliorer la résistance chimique, par exemple la résistance aux huiles, dans ladite composition.

Toutefois, cette incorporation de polyesters, comme par exemple le polybutylène téréphthalate (PBT), dans la composition élastomère ne donne pas des mélanges satisfaisants puisque ces deux types de composés polymères sont difficilement miscibles entre eux.

En effet, cette incompatibilité nécessite généralement de réaliser le mélange à une température supérieure à la température de dégradation de l'élastomère, cette température de dégradation étant par exemple de 220°C pour le copolymère d'éthylène acétate de vinyle (EVA).

Il est donc difficile de préparer des compositions élastomères comprenant des polyesters pour fabriquer des couches isolantes ou de protections pour câbles, présentant de bonnes propriétés mécaniques, thermiques et chimiques.

Le problème technique à résoudre, par l'objet de la présente invention, est de proposer un procédé de fabrication d'un câble d'énergie et/ou de télécommunication comprenant au moins une couche en un matériau obtenu à partir d'une composition élastomère comprenant un copolymère d'éthylène acétate de vinyle et un polyester, ledit procédé permettant de s'affranchir des problèmes de miscibilité en offrant notamment des propriétés thermiques, mécaniques et chimiques améliorées de façons significatives.

La solution du problème technique posé réside en ce que la présente invention propose un procédé de fabrication d'un câble d'énergie et/ou de télécommunication comprenant au moins une couche en un matériau obtenu par activation thermique d'une composition élastomère contenant un copolymère d'éthylène acétate de vinyle, un oligomère cyclique de polyester, et un catalyseur de transestérification, ledit matériau comprenant des nodules de polyester.

La Demanderesse a découvert de façon surprenante que l'incorporation d'un oligomère cyclique de polyester dans une composition élastomère à base d'EVA en présence d'un catalyseur de transestérification permet d'obtenir un matériau aux propriétés mécaniques, thermiques et chimiques optimisées.

Notamment, ledit matériau présente une très bonne résistance aux huiles et aux solvants.

Avantageusement, les oligomères cycliques de polyester ont une miscibilité suffisante avec l'EVA pour obtenir des mélanges élastomères homogènes à une température inférieure à la température de dégradation de l'EVA (220°C).

De plus, la polymérisation, par activation thermique, de l'oligomère cyclique de polyester en polyester s'effectue in situ, c'est-à-dire directement dans la matrice à base d'EVA, formant ainsi des nodules de polyester dispersés de façon homogène dans ledit matériau.

En d'autres termes, les nodules de polyester sont des particules durcies in situ, à l'intérieur même de la composition élastomère, le diamètre de ces particules étant inférieur au micron.

En outre, les groupements acétates de vinyle de l'EVA sont essentiels pour favoriser la miscibilité avec l'oligomère cyclique de polyester.

Le catalyseur de transestérification permet d'accélérer la cinétique d'ouverture du cycle de l'oligomère cyclique de polyester, mais également il permet avantageusement de créer de liaisons chimiques entre les groupements acétates de vinyle et l'oligomère cyclique de polyester.

Le matériau ainsi obtenu comprend des nodules de polyester et présente ainsi de très bonnes propriétés mécaniques, thermiques et chimiques.

Dans un mode de réalisation particulièrement préféré, ledit matériau est ensuite extrudé pour former une couche constitutive d'un câble d'énergie et/ou de télécommunication.

Le procédé d'extrusion n'est pas limitatif et ladite couche peut être également formée à partir dudit matériau par tout autre procédé bien connu de l'homme du métier.

Dans un autre mode de réalisation, la composition élastomère peut être directement extrudée pour former ladite couche.

Dans ce cas, l'activation thermique de ladite composition s'effectue pendant son extrusion.

Qu'il soit électrique ou optique, destiné au transport d'énergie ou à la transmission de données, un câble est schématiquement constitué d'au moins un élément conducteur électrique ou optique s'étendant respectivement à l'intérieur d'au moins un élément isolant ou de protection.

Il est à noter qu'au moins un des éléments isolants peut également jouer le rôle de moyen de protection spécifique formant une gaine, notamment pour les câbles électriques.

Dans la présente invention, la couche peut être un élément isolant ou une gaine de protection, de préférence une gaine de protection.

Dans un mode de réalisation particulier, la composition élastomère comprend au moins 40% en poids de copolymère d'éthylène acétate de vinyle.

Cette quantité permet de garder des propriétés mécaniques suffisantes propres à l'EVA dans la composition élastomère.

De préférence, la composition élastomère comprend 70% en poids d'EVA.

Bien entendu, la composition élastomère peut comprendre un ou plusieurs polymères différents de l'EVA, l'EVA devant rester toutefois majoritaire par rapport à ces polymères pour ne pas dégrader les propriétés élastomères de ladite composition.

Selon une caractéristique particulière de la présente invention, le copolymère d'éthylène acétate de vinyle comprend au moins 19% en masse de groupements vinyle acétate, de préférence 28% en masse de groupements vinyle acétate.

L'oligomère cyclique de polyester est typiquement un oligomère de poly(alkylène dicarboxylate) cyclique tel que décrit dans le document brevet W02005/063882 incorporé par référence.

Dans un mode de réalisation particulièrement avantageux, l'oligomère cyclique de polyester est choisi parmi les oligomères cycliques de poly(1, 4-butylene terephthalate) (cPBT), de poly(ethylene terephthalate) (cPET), de poly(1, 3-propylene terephthalate) (cPPT), de poly(1, 4-cyclohexylenedimethylene terephthalate) (cPCT), et de poly(1, 2-ethylene 2,6-naphthalenedicarboxylate) (cPEN).

De préférence, l'oligomère cyclique de polyester est le cPBT.

Dans un autre mode de réalisation particulier, la composition élastomère comprend au plus 50% en poids d'oligomère cyclique de polyester.

De manière particulièrement avantageuse, le rapport massique entre l'EVA et l'oligomère cyclique de polyester est égal à 70/30.

Dans un autre mode de réalisation particulier, la composition élastomère comprend de 0,5 à 2 pcr de catalyseur pour 100 parties en poids de polymère dans ladite composition, de préférence 1 pcr de catalyseur.

Le catalyseur de transesterification est typiquement un catalyseur à base de titane ou d'étain tel que décrit dans le document brevet W02005/063882 incorporé par référence.

De préférence, ledit catalyseur est le tétrabutoxyde de titane.

Dans un mode de réalisation particulièrement préféré, la composition élastomère selon la présente invention peut tout d'abord être homogénéisée à une température d'homogénéisation égale à la température de fusion de l'oligomère cyclique de polyester.

Cette température d'homogénéisation permet d'optimiser avantageusement la miscibilité de l'oligomère cyclique de polyester dans la matrice EVA, l'activation de la polymérisation dudit oligomère par le catalyseur étant quasiment inexistante à cette température.

De préférence, la température d'homogénéisation est égale à environ 160°C.

Ensuite, après l'étape d'homogénéisation, l'activation thermique de la composition élastomère s'effectue à une température d'activation supérieure à la température de fusion de l'oligomère cyclique de polyester et à une température inférieure à 220°C afin de permettre la polymérisation de l'oligomère cyclique de polyester dans la composition élastomère et ainsi former le matériau comprenant des nodules de polyesters.

La température d'activation permet avantageusement d'activer l'ouverture des cycles des oligomères cycliques de polyester en présence du catalyseur.

De préférence, la température d'activation est égale à environ 190°C.

Les étapes d'homogénéisation et d'activation ne sont pas nécessairement dépendantes l'une de l'autre, l'étape d'homogénéisation pouvant notamment être optionnelle.

Un autre objet selon la présente invention est un câble d'énergie et/ou de télécommunication comprenant au moins une couche obtenue à partir dudit procédé tel que défini ci-avant.

D'autres caractéristiques et avantages de la présente invention apparaîtront à la lumière des exemples qui vont suivre, lesdits exemples étant donnés à titre illustratif et nullement limitatif.

Afin de montrer les avantages des matériaux obtenus à partir des compositions élastomères selon la présente invention, le Tableau 1 détaille les constituants de 7 compositions différentes dont les propriétés mécaniques ont été étudiées.

Les quantités mentionnées dans le Tableau 1 sont exprimées en parties en poids (pcr) pour 100 parties de polymère dans la composition.

La composition A correspond à une composition selon la présente invention et les compositions B à G correspondent à des compositions comparatives.

**Tableau 1**

| Compositions | A | B | C | D | E | F | G |
|---|---|---|---|---|---|---|---|
| Elvaloy3427 | | | | | | 70 | 70 |
| LL1004 | | | | 70 | 70 | | |
| Elvax265 | 70 | 100 | 70 | | | | |
| CBT X03 | 30 | | | | 30 | | 30 |
| Ti(OBu)a | 1 | | | | 1 | | 1 |
| Vestodur3013 | | | 30 | 30 | | 30 | |

L'origine des constituants des compositions A à G est la suivante :
- Elvaloy3427 est la référence d'un copolymère d'éthylène butyle acrylate (EBA), comprenant 17% de groupements butyle acrylate, commercialisé par la société Dupont Dow ;
- LL1004 est la référence d'un polymère d'éthylène basse densité (LDPE) commercialisé par la société Exxon ;
- Elvax265 est la référence d'un copolymère d'éthylène acétate de vinyle (EVA) comprenant 28% de groupements vinyle acétate, commercialisé par la société Dupont ;
- CBTX3 est la référence d'un oligomère cyclique du polybutylène téréphthalate (cPBT) commercialisé par la société Cyclics ;
- Ti(OBu)4 est un catalyseur de tétrabutoxyde de titane commercialisé par la société Aldrich ; et
- Vestodur3013 est un polybutylène téréphthalate (PBT) par la société Degussa.

La composition A, ainsi que les compositions E et G, sont mises en oeuvre à 50 tours/min en mélangeur interne à une température d'homogénéisation de mélange fixée à 160°C.

Cette température permet la fusion du cPBT dans la matrice EVA, LDPE ou EBA des compositions A, E et G, la température de fusion du cPBT étant compris entre 120 et 160°C.

Après 20 minutes de mélange, le catalyseur au titane a été ajouté et le mélange a été poursuivi pendant 60 minutes à 160°C.

Pendant l'étape d'homogénéisation, dans le cas du mélange A, une bonne compatibilité entre l'EVA et le cPBT rend le mélange beaucoup plus facile et plus homogène.

Ainsi, ledit oligomère cyclique de polyester est miscible et bien dispersé dans la composition élastomère.

Dans le cas des compositions E et G, il est difficile d'homogénéiser correctement le mélange à cause d'une lubrification importante, ou en d'autres termes d'une mauvaise miscibilité, induite par le cPBT non encore réagi.

Après ladite étape d'homogénéisation, la température est fixée à 190°C (température d'activation) pendant 20 minutes pour polymériser rapidement le cPBT en PBT (composition A), l'EVA n'étant pas dégradé à cette température.

La composition B est la composition de référence pour les propriétés mécaniques puisqu'elle ne comprend que de l'EVA.

Les compositions C, D et F, comprenant du PBT, sont mises en oeuvre à 50 tours/min en mélangeur interne à une température de mélange fixée à 220°C pendant 20 minutes, cette température permettant la fusion du PBT.

Les matériaux A à G obtenus sont ensuite mises sous presse à une température de 140°C pour former des plaques de 1 mm d'épaisseurs.

Ces plaques permettent de réaliser des échantillons du type éprouvette H2 selon la norme ISO 527-1 pour effectuer des tests mécaniques de type traction.

Ces tests de traction sont pratiqués sur lesdites éprouvettes avec une vitesse de traverse de 100 mm/min.

Ces essais permettent de mesurer les propriétés mécaniques telles que les contraintes et allongements à la rupture des échantillons A à G.

Les résultats sont rassemblés dans le Tableau 2 ci-après.

**Tableau 2**

| Echantillons | A | B | C | D | E | F | G |
|---|---|---|---|---|---|---|---|
| Contrainte à la rupture (MPa) | 18 | 12 | 8 | 7 | 7 | 3 | 3 |
| Allongement à la rupture (%) | 1100 | 1600 | 300 | 115 | 167 | 244 | 218 |

Comme on peut le constater, d'un point de vue mécanique, seul le mélange EVA/cPBT (échantillon A) montre une amélioration de la contrainte à la rupture par rapport aux échantillons B à G.

Plus particulièrement, l'échantillon A a une contrainte à la rupture supérieure de près de 50% à celle de l'échantillon B et des propriétés mécaniques bien supérieures à celles d'un mélange EVA/PBT (échantillon C).

En outre, la résistance chimique des mélanges A à C a été évaluée en mesurant le taux de gonflement (en % volumique) d'une éprouvette de traction du type H2 après 1 semaine passée à 100°C dans une huile normalisé ASTM 3.

On observe que le mélange A est gonflé par l'huile, mais l'éprouvette conserve son intégrité, à l'inverse des échantillons B et C qui se désagrègent complètement.

Une analyse au microscope électronique à balayage pris sur des insolubles des échantillons A et C après 2 jours passés dans le tétrahydrofurane (THF) permet de révéler la morphologie de la phase PBT formée au sein des mélanges.

Ainsi, la taille des particules (nodules) de PBT formées par polymérisation au sein même de l'EVA (échantillon A) est plus petite que pour un mélange EVA/PBT (échantillon C), le diamètre des particules dans l'échantillon A étant inférieur au micron.

La présente invention n'est pas limitée aux exemples de compositions élastomères qui viennent d'être décrits et porte dans sa généralité sur tous les matériaux envisageables à partir des indications générales fournies dans l'exposé de l'invention.

## Revendications

1. Procédé de fabrication d'un câble d'énergie et/ou de télécommunication **caractérisé en ce qu'**il comprend au moins une couche en un matériau obtenu par activation thermique d'une composition élastomère contenant un copolymère d'éthylène acétate de vinyle, un oligomère cyclique de polyester, et un catalyseur de transestérification apte à créer des liaisons chimiques entre les groupements acétates de vinyle dudit copolymère et l'oligomère cyclique de polyester, ledit matériau comprenant des nodules de polyester.

2. Procédé selon la revendication 1, **caractérisé en ce que** la composition élastomère comprend au moins 40% en poids de copolymère d'éthylène acétate de vinyle, de préférence 70% en poids de copolymère d'éthylène acétate de vinyle.

3. Procédé selon la revendication 1 ou 2, **caractérisé en ce que** le copolymère d'éthylène acétate de vinyle comprend au moins 19% en masse de groupements vinyle acétate, de préférence 28% en masse de groupements vinyle acétate.

4. Procédé selon l'une quelconque des revendications précédentes, **caractérisé en ce que** l'oligomère cyclique de polyester est choisi parmi les oligomères cycliques de poly(1, 4-butylene terephthalate) (cPBT), de poly(ethylene terephthalate) (cPET), de poly(1, 3-propylene terephthalate) (cPPT), de poly(1, 4-cyclohexylenedimethylene terephthalate) (cPCT), et de poly(1, 2-ethylene 2,6-naphthalenedicarboxylate) (cPEN).

5. Procédé selon l'une quelconque des revendications précédentes, **caractérisé en ce que** la composition élastomère comprend au plus 50% en poids d'oligomère cyclique de polyester.

6. Procédé selon l'une quelconque des revendications précédentes, **caractérisé en ce que** le rapport massique entre l'EVA et l'oligomère cyclique de polyester est égal à 70/30.

7. Procédé selon l'une quelconque des revendications précédentes, **caractérisé en ce que** la composition élastomère comprend de 0,5 à 2 pcr de catalyseur pour 100 parties en poids de polymère dans ladite composition, de préférence 1 pcr de catalyseur.

8. Procédé selon l'une quelconque des revendications précédentes, **caractérisé en ce que** l'activation thermique s'effectue à une température d'activation supérieure à la température de fusion de l'oligomère cyclique de polyester et à une température inférieure à 220°C.

9. Procédé selon la revendication 8, **caractérisé en ce que** la température d'activation est égale à environ 190°C.

10. Procédé selon l'une quelconque des revendications précédentes, **caractérisé en ce que** l'étape d'activation est précédée d'une étape d'homogénéisation de la composition élastomère à une température d'homogénéisation égale à la température de fusion de l'oligomère cyclique de polyester.

11. Procédé selon la revendication 10, **caractérisé en ce que** la température d'homogénéisation est égale à environ 160°C.

12. Câble d'énergie et/ou de télécommunication comprenant au moins une couche obtenue à partir du procédé tel que défini aux revendications 1 à 11.

## Claims

1. A method for manufacturing a power and/or telecommunications cable, **characterized in that** it comprises at least one layer in a material obtained by thermal activation of an elastomeric composition containing an ethylene-vinyl acetate copolymer, a cyclic polyester oligomer, and a trans-esterification catalyst capable of generating chemical bonds between the vinyl acetate groups of said copolymer and the cyclic polyester oligomer, said material comprising polyester nodules.

2. The method according to claim 1, **characterized in that** the elastomeric composition comprises at least 40% by weight of ethylene-vinyl acetate copolymer, preferably 70% by weight of ethylene-vinyl acetate copolymer.

3. The method according to claim 1 or 2, **characterized in that** the ethylene-vinyl acetate copolymer comprises at least 19% by mass of vinyl acetate groups, preferably 28% by mass of vinyl acetate groups.

4. The method according to any of the preceding claims, **characterized in that** the cyclic polyester oligomer is selected from cyclic oligomers of poly(1,4-butylene terephthalate) (cPBT), of poly(ethylene terephthalate) (cPET), of poly(1,3-propylene terephthalate) (cPPT), of poly(1,4-cyclohexylene-dimethylene terephthalate) (cPCT), and of poly(1,2-ethylene 2,6-naphthalenedicarboxylate) (cPEN).

5. The method according to any of the preceding claims, **characterized in that** the elastomeric composition comprises at most 50% by weight of a cyclic polyester oligomer.

6. The method according to any of the preceding claims, **characterized in that** the mass ratio between the EVA and the cyclic polyester oligomer is equal to 70/30.

7. The method according to any of the preceding claims, **characterized in that** the elastomeric composition comprises from 0.5 to 2 pcr of catalyst for 100 parts by weight of polymer in said composition, preferably 1 pcr of catalyst.

8. The method according to any of the preceding claims, **characterized in that** thermal activation is carried out at an activation temperature above the melting temperature of the cyclic polyester oligomer and at a temperature below 220°C.

9. The method according to claim 8, **characterized in that** the activation temperature is equal to about 190°C.

10. The method according to any of the preceding claims, **characterized in that** the activation step is preceded with a step for homogenization of the elastomeric composition at a homogenization temperature equal to the melting temperature of the cyclic polyester oligomer.

11. The method according to claim 10, **characterized in that** the homogenization temperature is equal to about 160°C.

12. A power and/or telecommunications cable comprising at least one layer obtained from the method as defined in claims 1 to 11.

## Patentansprüche

1. Verfahren zur Herstellung eines Strom- und/oder Telekommunikationskabels, **dadurch gekennzeichnet, dass** es mindestens eine Schicht aus einem Werkstoff umfasst, das durch thermische Aktivierung einer Elastomerzusammensetzung hergestellt wurde, die ein Ethylenvinylacetat-Copolymer, ein zyklisches Polyesteroligomer und einen Transesterifikations-Katalysator enthält, der imstande ist, chemische Verbindungen zwischen den Vinylacetatgruppen des Copolymers und dem zyklischen Polyesteroligomer zu bilden, wobei der Werkstoff Polyesterpellets aufweist.

2. Verfahren nach Anspruch 1, **dadurch gekennzeichnet, dass** die Elastomerzusammensetzung mindestens 40 Gew.-% Ethylenvinylacetat-Copolymer, vorzugweise 70 Gew.-% Ethylenvinylacetat-Copolymer, umfasst.

3. Verfahren nach Anspruch 1 oder 2, **dadurch gekennzeichnet, dass** das Ethylenvinylacetat-Copolymer mindestens 19 % Massenanteil Vinylacetatverbindungen, vorzugsweise 28 % Massenanteil Vinylacetatverbindungen, umfasst.

4. Verfahren nach einem der vorangehenden Ansprüche, **dadurch gekennzeichnet, dass** das zyklische Polyesteroligomer aus den zyklischen Oligomeren von Poly(1,4-butylenterephthalat) (cPTB), von Poly(ethylenterephthalat) (cPET), von Poly(1,3-propylenterephthalat) (cPPT), von Poly(1,4-cyclohexylendimethylenterephthalat (cPCT) und von Poly(1,2-ethylen 2,6-naphthalendicarboxylat) (cPEN) ausgewählt ist.

5. Verfahren nach einem der vorangehenden Ansprüche, **dadurch gekennzeichnet, dass** die Elastomerzusammensetzung höchstens 50 Gew.-% zyklisches Polyesteroligomer umfasst.

6. Verfahren nach einem der vorangehenden Ansprüche, **dadurch gekennzeichnet, dass** das Massenverhältnis zwischen dem EVA und dem zyklischen Polyesteroligomer gleich 70/30 ist.

7. Verfahren nach einem der vorangehenden Ansprüche, **dadurch gekennzeichnet, dass** die Elastomerzusammensetzung 0,5 bis 2 pcr Katalysator, vorzugsweise 1 pcr Katalysator, für 100 Gewichtsanteile Polymer in der Zusammensetzung umfasst.

8. Verfahren nach einem der vorangehenden Ansprüche, **dadurch gekennzeichnet, dass** die thermische Aktivierung bei einer Aktivierungstemperatur über der Fusionstemperatur des zyklischen Polyesteroligomers erfolgt und bei einer Temperatur unter 220 °C.

9. Verfahren nach Anspruch 8, **dadurch gekennzeichnet, dass** die Aktivierungstemperatur gleich zirka 190 °C ist.

10. Verfahren nach einem der vorangehenden Ansprüche, **dadurch gekennzeichnet, dass** dem Schritt der Aktivierung ein Schritt der Homogenisierung der Elastomerzusammensetzung bei einer Homogenisierungstemperatur vorangeht, die der Fusionstemperatur des zyklischen Polyesteroligomers entspricht.

11. Verfahren nach Anspruch 10, **dadurch gekennzeichnet, dass** die Homogenisierungstemperatur gleich zirka 160 °C ist.

12. Strom- und/oder Telekommunikationskabel, das mindestens eine Schicht umfasst, die nach dem Verfahren wie in den Ansprüchen 1 bis 11 festgelegt hergestellt ist.
